Europäisches Patentamt

European Patent Office

Office européen des brevets

(19)

(11) Publication number: **0 266 277 B1**

# (12) EUROPEAN PATENT SPECIFICATION

(45) Date of publication of patent specification: **09.06.93**  (51) Int. Cl.5: **C04B 35/58**

(21) Application number: **87402457.3**

(22) Date of filing: **02.11.87**

(54) **A process for producing sintered bodies of aluminium nitride having a high thermal conductivity.**

(30) Priority: **31.10.86 JP 260156/86**

(43) Date of publication of application:
**04.05.88 Bulletin 88/18**

(45) Publication of the grant of the patent:
**09.06.93 Bulletin 93/23**

(84) Designated Contracting States:
**DE FR GB IT**

(56) References cited:
**EP-A- 0 147 101**
**EP-A- 0 153 737**

**AMERICAN CERAMIC SOCIETY BULLETIN,
vol. 63, no. 9, September 1984, pages
1158-1164, Columbus, Ohio, US; K. KOMEYA:
"Development of nitrogen ceramics"**

(73) Proprietor: **SUMITOMO ELECTRIC INDUSTRIES
LIMITED
No. 15, Kitahama 5-chome, Higashi-ku
Osaka-shi, Osaka 541(JP)**

(72) Inventor: **Sogabe, Koichi Itami Works of
Sumitomo Electric
Industries Ltd. 1-1, Koyakita 1-chome
Itami-shi Hyogo(JP)**
Inventor: **Sakanoue, Hitoyuki Itami Works of
Sumitomo Electr.
Industries Ltd. 1-1, Koyakita 1-chome
Itami-shi Hyogo(JP)**
Inventor: **Sasaki, Nobuyuki Itami Works of
Sumitomo Electric
Industries Ltd. 1-1, Koyakita 1-chome
Itami-shi Hyogo(JP)**

(74) Representative: **Lemoine, Michel et al
Cabinet Michel Lemoine et Bernasconi 13
Boulevard des Batignolles
F-75008 Paris (FR)**

**Description**

The present invention relates to a process for producing sintered bodies of aluminum nitride and more particularly sintered aluminum nitride products having superior practical properties such as a high thermal conductivity, improved insulation property, a low dielectric constant or the like.

With the recent remarkable development of LSI technology, the calorific value or the amount of heat generated in the IC tip per IC package have been increasing owing to large increment of the degree of integration of LSI and owing to drastic reduction of the size of the IC tip. Therefore, the property of thermal-radiation of a substrate of IC tip has been risen in importance.

Heretofore, a sintered alumina body has been used as the substrate of IC tips. However, a substrate made of sintered alumina cannot accommodate the increased amount of heat generated in the IC tips because of its insufficient thermal conductivity. It was also proposed to use a substrate of beryllia having a high thermal conductivity in place of the alumina substrate. The beryllia substrate, however, is difficult to be processed or handled because of the toxic property of beryllia.

Recently, aluminum nitride has become the object of industrial attention in the field of semiconductor industry as a packaging material for IC or as an insulating material, because aluminum nitride (AIN) possesses inherently a high thermal conductivity and a high electrical resistance and is an innoxious material. Thus, a single crystal of aluminum nitride possesses a high thermal conductivity and a high electrical resistance.

However, in case of sintered products, sintered bodies of aluminum nitride contain a large number of pores, because the powder of aluminum nitride to be sintered has not inherently satisfactory sintering property, so that the relative density ( with respect to the theoretical density of a single crystal of aluminum nitride: 3.26 $g/cm^3$ ) of the sintered aluminum nitride is at most 70 to 80 %. When there exist a large number of defects such as pores or impurities in the sintered body, satisfactory higher thermal conductivity cannot be expected, since the mechanism of thermal conduction in insulative ceramics such as aluminum nitride depends mainly on the conduction of phonons whose movement is scattered by the defects.

It was proposed to add a variety of sintering aids to the material powder of aluminum nitride before the material is sintered in a hot-press or under ambient pressure in order to obtain sintered products having higher density and higher thermal conductivity. In fact, substantial improvement in the quality of the sintered articles can be achieved by the addition of sintering aids. For example, Japanese patent publication No. 58-49510 discloses a sintering process in which sintering aids such as calcium oxide (CaO), barium oxide (BaO), strontium oxide (SrO) or the like are added to the material powder. According to the process, sintered products having higher relative density of more than 98 % and improved thermal conductivity of 0.10 to 0.13 cal/cm.sec.deg ( 42 to 54 W/m.K, at ambient temperature ) were obtained. However, such values of the thermal conductivity is not enough to accommodate ceaseless demands for heat-radiation of IC and LSI in future.

It was also proposed in Japanese patent publication No. 56-9475 to add yttrium oxide ($Y_2O_3$) and silicon oxide ($SiO_2$) or the like to the powder material of aluminum nitride in order to obtain a sintered article having higher density and higher strength. This Japanese patent publication reveals that the resulting sintered articles have a very high relative density of more than 98 % but have a rather low thermal conductivity of less than 0.07 cal/cm.sec.deg. ( 29 W/m.K ). This fact reveals that the conditions which are required to improve or increase the thermal conductivity depend not only on the density of the sintered article but also on the other factors such as the structure of crystal thereof or the like. Namely, the fibrous structure obtained by the prior art disclosed in the Japanese patent publication No. 56-9475 is considered to be an injurious structure and has no merit on obtaining a high thermal conductivity, although it may contribute to improve the strength of the sintered products.

Therefore, an object of the present invention is to provide a method for the production of sintered products of aluminum nitride having an improved crystalline structure assuring both a high relative density of more than 95 % and a high thermal conductivity of more than 150 W/m.K.

More precisely, it is an object of the present invention to provide a method for the production of sintered bodies of aluminum nitride having not only higher density but also improved practical properties such as high thermal conductivity, high insulative resistance, low dielectric constant or the like which are important in practical uses in the field of semiconductors as insulation material or packaging material.

## SUMMARY OF THE INVENTION

The present inventors have extensively studied a variety of factors in the sintering process such as the purity and the proportion of material powders, the kind of sintering aids, crystalline structure of the sintered products with the object of producing sintered products of aluminum nitride having a high thermal conductivity of more than 150 W/m.K , and finally found such a fact that addition of gadolinium oxide to the material powder of aluminum nitride can improve remarkably the degree of sintering of aluminum nitride so that highly packed sintered products are produced and also is very effective to improve the thermal conductivity. The result of analysis by the X-ray diffraction carried out on the resulting sintered products revealed that there exists a phase of grain boundary consisting mainly of $GdAlO_3$ and $Gd_2O_3$ in the sintered product and the present inventors ascertained that the existence of the grain boundary contributes to remarkable improvements in the thermal conductivity.

Therefore, the present invention provides a sintered product of aluminum nitride having a high thermal conductivity, characterized in that the sintered product is obtained by sintering the material powder of aluminum nitride containing 5.0 to 15 % by weight of gadolinium oxide, and in that the sintered product has a grain boundary consisting mainly of $GdAlO_3$ and $Gd_2O_3$ and has a relative density of more than 95 % and a thermal conductivity of more than 150 W/m.K at ambient temperature.

The sintered body having a high thermal conductivity and consisting mainly of aluminum nitride according to the present invention is further characterized in that said sintered body contains more than 0.01 % by weight but less than 1.0 % by weight of gadolinium calculated in terms of $Gd_2O_3$, and in that the grain boundary of the sintered body consists mainly of $GdAlO_3$ + $Gd_2O_3$ and the sintered body has a relative density of more than 95 % and a thermal conductivity at room temperature of more than 150 W/m.K.

The present invention also provides a process for producing a sintered product having a high thermal conductivity comprising mixing 85 to 95.0 % by weight of aluminum nitride powder whose oxygen content is 0.1 to 2.0 % by weight with 5.0 to 15 % by weight of gadolinium oxide, molding the resulting mixture into a compact, and then sintering the compact at 1800 to 2200 °C in non-oxidizing atmosphere to produce a structure of a sintered product having a phase of grain boundary consisting mainly of $GdAlO_3$ and $Gd_2O_3$.

DESCRIPTION OF THE PREFERRED EMBODIMENTS

The sintered product according to the present invention is obtained by sintering a powder mixture of 85 to 95.0 % by weight of aluminum nitride and 5.0 to 15 % by weight of gadolinium oxide. If the amount of gadolinium oxide to be added to the aluminum nitride is not more than 1.0 % by weight, it is impossible to obtain the desired sintered product, because gadolinium oxide is consumed by or reacted with oxygen which is ordinarily contained in aluminum nitride and hence the amount of $GdAlO_3$ and $Gd_2O_3$ which is indispensable to improve both the relative density and the thermal conductivity becomes insufficient. In fact, according to the present invention, the gadolinium oxide reacts with aluminum nitride and with oxygen contained in the aluminum nitride during the sintering stage to produce a liquid phase containing $GdAlO_3$ and $Gd_2O_3$. The success of improvement in the density and thermal conductivity of the sintered product according to the present invention results from the sintering in the abovementioned liquid phase. In other words, the grain boundary of the sintered product consists mainly of $GdAlO_3$ and $Gd_2O_3$.

According to another aspect of the present invention, the content of gadolinium in the sintered product is preferably more than 0.01 % by weight but less than 1.0 % by weight calculated in terms of $Gd_2O_3$. The gadolinium compound added to aluminum nitride is reacted by with oxygen in the aluminum nitride or consumed for sintering reaction and the non-reacted gadolinium escapes from or leaves off the sintered body and hence, after the sintered body is quenched, the content of gadolinium remaining in the sintered body decreases from the amount of gadolinium added as starting material. The optimum content of gadolinium in the sintered body in order to obtain higher thermal conductivity is more than 0.01 % by weight but less than 1.0 % by weight calculated in terms of $Gd_2O_3$.

Particularly, when the sintering is carried out by a hot-press, the remaining amount of gadolinium in the sintered body can be reduced greatly to obtain the desired sintered product having improved properties.

When the amount of gadolinium oxide to be added to aluminum nitride exceeds 15 % by weight, the remaining amount of gadolinium in the sintered product exceeds 1 % by weight, which results in degradation of resistance to oxidation, corrosion resistance or dielectric constant and in deterioration of the thermal conductivity of the sintered product, since inherent properties of aluminum nitride itself are spoiled, and which also results in lowering the relative density of the sintered product.

In conclusion, the amount of gadolinium oxide to be added to aluminum nitride must be between 1.0 and 15 % by weight and the amount of gadolinium remaining in the sintered product must be more than 0.01 % by weight but less than 1.0 % by weight calculated in terms of $Gd_2O_3$.

The aluminum nitride powder used in the present invention contains less than 2.0 % by weight and may be produced by the so-called " alumina reduction process " but is not limited to the powder material produced by this process. If the amount of oxygen contained in aluminum nitride exceeds 2.0 % by weight, excess oxygen is contained in the sintered product irrespective of the amount of gadolinium oxide added to the aluminum oxide and results in phonon scattering, and hence a high thermal conductivity of more than 150 W/m.K cannot be obtained. On the other hand, it is impossible to produce such aluminum nitride powder as containing less than 0.1 % by weight because of the economical reason under the present technology.

Thus, the improvement in density and thermal conductivity of the sintered product of aluminum nitride can be achieved by a combination of abovementioned aluminum nitride powder containing the optimum amount of oxygen and gadolinium oxide according to the present invention. Furthermore, within the range of the proportions of components of the materials according to the present invention, the granulation also occurs in the crystalline structure of the sintered product, and this granulation is supposed to contribute to the improvement in the thermal conductivity.

The sintering temperature is between 1800 and 2200 °C. If the sintering temperature is less than 1800 °C, satisfactory sintering cannot proceed. Higher sintering temperatures are desirable in case of sintering of aluminum nitride. However, if the sintering temperature exceeds 2200°C, decomposition reaction of aluminum nitride is excessively accelerated so that the weight reduction of the sintered product drops to an uneconomical level.

The non-oxidizing atmosphere may be provided with at least one of nitrogen gas, hydrogen gas, carbon monoxide gas, argon gas and helium gas.

According to one preferred embodiment of the present invention, the compact of the powder mixture is sintered under compressed condition of more than 50 kg/cm$^2$ by means of a hot-press under a non-oxidizing atmosphere in order to improve the properties of the sintered products.

The sintered body or sintered product of aluminum nitride according to the present invention can be used as a substrate for IC such as a substrate for cer-dip, cer-pack or hybrid IC, a thermal sink for power transistors, power diodes, laser diodes or the like, or in the field of laser tubes, as well as insulative thin film as a substitute of mica.

In the following, the present invention is illustrated in greater detail by examples, but the present invention is not limited to the examples.

## EXAMPLE 1

Aluminum nitride powder whose content of oxygen was 0.8 % by weight was blended with gadolinium oxide powder so as to obtain sample compositions shown in Table 1. The percentage of the gadolinium oxide in the samples was between 5.0 and 15 % by weight. Then, the resulting powder mixture was shaped into a compact under a pressure of 2 000 kg/cm$^2$. The compacts were sintered at a temperature which is between 1800 and 2200 °C for three hours under ambient pressure. The relative density and the thermal conductivity of the resulting sintered products are shown in the Table 1.

The sintering operation was carried out in nitrogen gas atmosphere ( 1 atm ). The blending of the gadolinium oxide powder to the aluminum nitride powder was performed for 12 hours by means of a ball mill.

It is apparent from the Table 1 that the sintered products which were obtained by adding 5.0 to 15 % by weight of gadolinium oxide according to the present invention to aluminum nitride powder and by sintering the mixture at a temperature of between 1800 and 2200 °C showed higher density and improved thermal conductivity of more than 150 W/m.K. It was also affirmed that there exists a grain boundary consisting mainly of $GdAlO_3$ and $Gd_2O_3$ in all the samples.

## COMPARATIVE EXAMPLES 1

In comparative examples, samples were produced under the same conditions as in Example 1, except the percentages of gadolinium oxide and the sintering temperatures which were outside the scope of the present invention. The results are shown in the Table 1 as Comparatives.

| SAMPLE No. | | COMPOSITION (wt %) | | SINTERING | | RELATIVE DENSITY (%) | THERMAL CONDUC- TIVITY (W/m · K) | STRUCTURE OF GRAIN BOUNDARY BY X-RAY DIFFRACTION |
|---|---|---|---|---|---|---|---|---|
| | | AlN | $Gd_2O_3$ | TEMP ℃ | TIME (hr) | | | |
| 1 | COMPARA- TIVE | 99.5 | 0.5 | 1900 | 3 | 90.4 | 89 | $GdAlO_3$ |
| 2 | | 99.0 | 1.0 | 1900 | 3 | 99.8 | 147 | |
| 3 | | 95.0 | 5.0 | 1900 | 3 | 99.9 | 169 | $GdAlO_3$ + $Gd_2O_3$ + $\alpha$ |
| 4 | EXAMPLE | 92.0 | 8.0 | 1900 | 3 | 99.8 | 185 | |
| 5 | | 88.0 | 12.0 | 1900 | 3 | 99.9 | 213 | |
| 6 | | 85.0 | 15.0 | 1900 | 3 | 99.8 | 183 | |
| 7 | COMPARA- TIVE | 80.0 | 20.0 | 1900 | 3 | 93.1 | 131 | — |
| 8 | COMPARA- TIVE | 95 | 5 | 1600 | 3 | 90.1 | — | — |
| 9 | | 95 | 5 | 1800 | 3 | 99.9 | 151 | $GdAlO_3$ + $Gd_2O_3$ + $\alpha$ |
| 10 | EXAMPLE | 95 | 5 | 2000 | 3 | 99.9 | 166 | |
| 11 | | 95 | 5 | 2200 | 3 | 99.8 | 175 | |

$\alpha$ : unknown spectrum peaks in X-ray diffraction

EP 0 266 277 B1

T A B L E  1  (B)  -continued-

| SAMPLE No. | | COMPOSITION (wt%) | | SINTERING | | RELATIVE DENSITY (%) | THERMAL CONDUCTIVITY (W/m·K) | STRUCTURE OF GRAIN BOUNDARY BY X-RAY DIFFRACTION |
|---|---|---|---|---|---|---|---|---|
| | | AlN | $Gd_2O_3$ | TEMP (°C) | TIME (hr) | | | |
| 12 | COMPARATIVE | 92 | 8 | 1600 | 3 | 90.8 | 110 | — |
| 13 | EXAMPLE | 92 | 8 | 1800 | 3 | 99.8 | 170 | $GdAlO_3$ + $Gd_2O_3$ + α |
| 14 | | 92 | 8 | 2000 | 3 | 99.9 | 198 | |
| 15 | | 92 | 8 | 2200 | 3 | 99.9 | 189 | |
| 16 | COMPARATIVE | 85 | 15 | 1600 | 3 | 93.2 | 129 | — |
| 17 | EXAMPLE | 85 | 15 | 1800 | 3 | 99.5 | 169 | $GdAlO_3$ + $Gd_2O_3$ + α |
| 18 | | 85 | 15 | 2000 | 3 | 99.9 | 189 | |
| 19 | | 85 | 15 | 2200 | 3 | 99.6 | 193 | |

α : SPECTRUM PEAK WHICH CANNOT BE ANALYZED BY X-RAY DIFFRACTION

It is apparent from Table 1 that samples of the comparative examples have neither satisfactory density nor improved thermal conductivity. For example, when the amount of gadolinium oxide added to aluminum nitride is not enough ( sample 1 ), only $GdAlO_3$ is observed at the grain boundary but $Gd_2O_3$ is not observed in the grain boundary. This is the reason why such advantage of the present invention that the sintered products show higher thermal conductivity is not obtained in case of the comparative examples.

On the other hand, when excess amount of gadolinium oxide is added such as in sample 7, excess gadolinium oxide remains in the resulting sintered products as residual which may cause the above-mentioned phonon scattering resulting in deterioration of thermal conductivity.

Still more, when the sintering temperatures are not high enough as is the cases of samples 8 and 16, the sintering cannot proceed completely, so that the resulting sintered products show very low density and poor thermal conductivity.

6

EXAMPLE 2

The same powder mixture of aluminum nitride and gadolinium oxide as in Example 1 was prepared under the same conditions as in Example 1 and then sintering was carried out in a hot-press at 200 kg/cm$^2$, at 1800 °C for 2 hours under a pressurized condition. The density and the thermal conductivity of the resulting sintered products are shown in Table 2 as Examples.

In case of the above-mentioned pressure sintering, the properties of the resulting sintered products can be much stabler than pressureless sintering.

COMPARATIVE EXAMPLE 2

The same pressure sintering by the hot-press as in Example 2 was carried out, but the compositions of aluminum nitride and gadolinium oxide were outside the scope of the present invention. The results are also shown in Table 2 as Comparative.

The Table 2 reveals that higher thermal conductivity cannot be attained when the amount of gadolinium oxide to be added to aluminum nitride is outside the scope of the present invention.

7

T A B L E 2

| SAMPLE No. | | COMPOSITION (wt%) | | SINTERING | | RELATIVE DENSITY (%) | THERMAL CONDUCTIVITY (W/m·K) | STRUCTURE OF GRAIN BOUNDARY BY X-RAY DIFFRACTION |
|---|---|---|---|---|---|---|---|---|
| | | AlN | Gd$_2$O$_3$ | TEMP (°C) | TIME (hr) | | | |
| 1 | COMPARATIVE | 100 | 0 | 1800 | 2 | 99.2 | 110 | — |
| 2 | EXAMPLE | 99.0 | 1.0 | 1800 | 2 | 99.9 | 150 | GdAlO$_3$ + Gd$_2$O$_3$ + α |
| 3 | | 95.0 | 5.0 | 1800 | 2 | 99.7 | 159 | |
| 4 | | 92.0 | 8.0 | 1800 | 2 | 99.8 | 165 | |
| 5 | | 88.0 | 12.0 | 1800 | 2 | 99.7 | 180 | |
| 6 | | 85.0 | 15.0 | 1800 | 2 | 99.8 | 185 | |
| 7 | COMPARATIVE | 80.0 | 20.0 | 1800 | 2 | 99.8 | 130 | GdAlO$_3$ + Gd$_2$O$_3$ |

α : SPECTRUM PEAK WHICH CANNOT BE ANALYZED BY X-RAY DIFFRACTION

EXAMPLE 3

In this example, aluminum nitride powders whose oxygen contents were different from each other were blended with 5 % by weight of gadolinium oxide powder. The powder mixtures were sintered at 1900 °C, for 3 hours under ambient pressure. The result is shown in Table 3 as Example. Table 3 reveals that improved properties can be attained when the content of oxygen in aluminum nitride is below 1.5 %.

In the Table 3, the oxygen contents in the aluminum nitride are indicated in parentheses.

COMPARATIVE EXAMPLE 3

In the comparative example, the contents of oxygen in aluminum nitride were outside the scope of the present invention, but the blending and sintering were carried out under the same conditions as in Example 3. The results are shown in the Table 3 as Comparative.

8

It is apparent from Table 3 that the values of the thermal conductivity of the comparative examples are very low when the oxygen contents in aluminum nitride exceed 2.0 %.

TABLE 3

| SAMPLE No. | | COMPOSITION (wt%) AlN | $Gd_2O_3$ | SINTERING TEMP (°C) | TIME (hr) | RELATIVE DENSITY (%) | THERMAL CONDUCTIVITY (W/m·K) |
|---|---|---|---|---|---|---|---|
| 1 | COMPARATIVE | 95 (2.5) | 5 | 1900 | 3 | 100.0 | 89 |
| 2 | COMPARATIVE | 95 (2.0) | 5 | 1900 | 3 | 99.9 | 99 |
| 3 | EXAMPLE | 95 (0.2) | 5 | 1900 | 3 | 99.9 | 189 |
| 4 | EXAMPLE | 95 (1.0) | 5 | 1900 | 3 | 99.5 | 159 |
| 5 | EXAMPLE | 95 (1.5) | 5 | 1900 | 3 | 99.7 | 154 |

EXAMPLE 4

Aluminum nitride powder whose content of oxygen was 0.4 % by weight was blended with gadolinium oxide powder so as to obtain sample compositions shown in Table 4. The percentage of the gadolinium oxide in the samples was between 0.1 and 15 % by weight. The resulting powder mixture was then sintered at a temperature of between 1800 and 2200 °C for three hours in a hot-press under a pressure of 100 kg/cm$^2$. The relative density and the thermal conductivity of the resulting sintered products are shown in the Table 4.

The sintering operation was carried out in nitrogen gas atmosphere ( 1 atm ). The blending of the gadolinium oxide powder with the aluminum nitride powder was performed for 12 hours by means of a ball mill.

It is apparent from the Table 4 that the sintered products which were obtained by adding 5.0 to 15 % by weight of gadolinium oxide according to the present invention to aluminum nitride powder and by sintering the mixture in the hot-press at a temperature of between 1800 and 2200 °C showed higher density and improved thermal conductivity of more than 150 W/m.K. It was also affirmed that there exists a grain boundary consisting mainly of $GdAlO_3$ and $Gd_2O_3$ in all the samples.

COMPARATIVE EXAMPLES 4

In comparative examples, samples were produced under the same conditions as in Example 4, except that the percentages of gadolinium oxide and the sintering temperatures which were outside the scope of present invention. The results are shown in the Table 4 as Comparatives.

## TABLE 4

| SAMPLE | | Composition of material (wt%) | | Sintering condition | | Product | | | |
|---|---|---|---|---|---|---|---|---|---|
| | | AlN | Gd₂O₃ | TEMP °C | TIME hr | Relative density (%) | Thermal conductivity (W/m·) | Structure of grain boundary (by X-ray diffraction) | Residual Gd in term of Gd₂O₃ |
| COMPARATIVE | 1 | 99.5 | 0.5 | 2100 | 3 | 90.4 | 89 | | < 0.01 |
| | 2 | 99.0 | 1.0 | 2100 | 3 | 99.8 | 147 | | 0.05 |
| EXAMPLE | 3 | 95.0 | 5.0 | 2100 | 3 | 99.9 | 169 | GdAlO₃ + Gd₂O₃ + α | 0.1 |
| | 4 | 92.0 | 8.0 | 2100 | 3 | 99.8 | 185 | | 0.5 |
| | 5 | 88.0 | 12.0 | 2100 | 3 | 99.9 | 213 | | 0.8 |
| | 6 | 85.0 | 15.0 | 2100 | 3 | 99.8 | 183 | | 0.9 |
| COMPARATIVE | 7 | 80.0 | 20.0 | 2100 | 3 | 93.1 | 131 | — | 1.2 |
| | 8 | 95 | 5 | 1600 | 3 | 90.1 | — | — | 2.0 |
| EXAMPLE | 9 | 95 | 5 | 1800 | 3 | 99.9 | 151 | GdAlO₃ + Gd₂O₃ + α | 0.9 |
| | 10 | 95 | 5 | 2000 | 3 | 99.9 | 166 | | 0.7 |
| | 11 | 95 | 5 | 2200 | 3 | 99.8 | 175 | | 0.3 |

α : unknown spectrum peaks in X-ray diffraction

It is apparent from Table 4 that samples of the comparative examples have neither satisfactory density nor improved thermal conductivity. For example, when the amount of gadolinium oxide added to aluminum nitride is not enough ( sample 1 ), only GdAlO₃ is observed at the grain boundary but Gd₂O₃ is not observed in the grain boundary. This is the reason why such advantage of the present invention that the sintered products show higher thermal conductivity is not obtained in case of the comparative examples.

On the other hand, when an excess amount of gadolinium oxide is added such as in sample 7, excess gadolinium oxide remains in the resulting sintered products as residual. In case of sample 7, the dielectric constant increased to more than 15.

Still more, when the sintering temperatures are not high enough as in the cases of samples 8, the sintering cannot proceed completely, so that the resulting sintered products show very low density and very poor thermal conductivity.

## Claims

1. A process for producing a sintered body having a thermal conductivity at ambient temperature of more than 150 W/mK and consisting mainly of aluminium nitride, comprising blending 85 to 95.0 % by weight of aluminum nitride powder whose oxygen content is between 0.1 and 2.0 % by weight with 5.0 to 15 % by weight of gadolinium oxide powder, molding the powder mixture, then carrying out sintering at a temperature between 1 800 and 2 200 °C in a non-oxidizing atmosphere for more than two hours to obtain a structure of the sintered body having a grain boundary consisting mainly of $GdAlO_3$. + $Gd_2.O_3$..

2. A process according to Claim 1 in which said non-oxidizing atmosphere is vacuum or is formed with at least one gas selected from the group comprising nitrogen gas, carbon monoxide gas, argon gas and helium gas.

3. A process according to Claim 1 or 2 in which the molded powder mixture is sintered under a pressure of more than 50 kg/cm$^2$.

## Patentansprüche

1. Verfahren zur Herstellung eines Sinterkörpers, der bei der Umgebungstemperatur eine Wärmeleitfähigkeit von mehr als 150 W/mK aufweist und der im wesentlichen aus Aluminiumnitrid besteht, wobei 85 bis 95,0 Gewichtsprozent Aluminiumnitridpulver, dessen Sauerstoffgehalt zwischen 0,1 und 2,0 Gewichtsprozent liegt, mit 5,0 bis 15 Gewichtsprozent Gadoliniumoxidpulver vermischt wird, das Pulvergemisch gepreßt wird und anschließend das Sintern bei einer Temperatur zwischen 1800 und 2200 °C in einer nicht oxidierenden Atmosphäre während mehr als zwei Stunden durchgeführt wird, um so eine Struktur des Sinterkörpers zu erzielen, deren Korngrenze im wesentlichen aus $GdAlO_3$ + $Gd_2O_3$ besteht.

2. Verfahren nach Anspruch 1, bei dem die nicht oxidierende Atmosphäre das Vakuum ist oder aus wenigstens einem Gas besteht, das ausgewählt ist aus der Gruppe, bestehend aus Stickstoffgas, Kohlenmonoxidgas, Argongas und Heliumgas.

3. Verfahren nach Anspruch 1 oder 2, bei dem das gepreßte Pulvergemisch unter einem Druck von mehr als 50 kg/cm$^2$ gesintert wird.

## Revendications

1. Procédé de production d'un corps fritté ayant une conductibilité thermique, à la température ambiante, supérieure à 150 W/mK et constitué principalement de nitrure d'aluminium, ce procédé consistant à mélanger 85 à 95,0 % en poids de poudre de nitrure d'aluminium, dont la teneur en oxygène est comprise entre 0,1 et 2,0 % en poids, avec 5,0 à 15 % en poids de poudre d'oxyde de gadolinium, à mouler le mélange de poudres, puis à exécuter un frittage à une température comprise entre 1 800 et 2 200 °C dans une atmosphère non oxydante pendant plus de 2 heures, de façon à obtenir une structure du corps fritté dont les joints entre grains sont constitués principalement de $GdAlO_3$ + $Gd_2O3$.

2. Procédé suivant la revendication 1, dans lequel ladite atmosphère non oxydante est constituée par du vide ou est formée d'au moins un gaz choisi dans le groupe formé de l'azote gazeux, du monoxyde de carbone gazeux, de l'argon gazeux et de l'hélium gazeux.

3. Procédé suivant l'une des revendications 1 et 2, dans lequel le mélange de poudres qui est moulé est fritté sous une pression supérieure à 50 kg/cm$^2$.